# EUROPÄISCHE PATENTSCHRIFT

(11) **EP 1 581 462 B1**
(45) Veröffentlichungstag und Bekanntmachung des Hinweises auf die Patenterteilung: **03.01.2007**
(21) Anmeldenummer: 03773519.8
(22) Anmeldetag: 14.10.2003
(51) Int. Cl.: C04B 28/02, C04B 28/14, C04B 24/24, C04B 40/00, C04B 18/26, C04B 16/06, C04B 14/38

(54) **VERFAHREN ZUR HERSTELLUNG EINES FORMKÖRPERS AUS EINEM HYDRATISIERBAREN MINERALISCHEN WERKSTOFF UND EINEM FÜLLSTOFF**
METHOD FOR PRODUCING A MOULDED BODY FROM A HYDRATABLE MINERAL MATERIAL AND A FILLER
PROCEDE DE FABRICATION D'UN CORPS MOULE A PARTIR D'UNE MATIERE MINERALE HYDRATABLE ET D'UNE CHARGE

(30) Priorität: 27.11.2002 DE 10255200
(43) Veröffentlichungstag der Anmeldung: 05.10.2005
(73) Patentinhaber: BTU Brandenburgische Technische Universität, 03044 Cottbus (DE)
(72) Erfinder: FREY, Reinhard, Prof. Dr. rer.nat, habil. Ing., 72184 Eutingen (DE)
(74) Vertreter: Hanelt, Holger
(86) Internationale Anmeldenummer: PCT/DE2003/003401
(87) Internationale Veröffentlichungsnummer: WO 2004/048288

(56) Entgegenhaltungen:
- DE-A- 3 626 048
- DE-U- 29 804 901

## Beschreibung

Die Erfindung betrifft ein Verfahren zur Herstellung eines Formkörpers aus einem hydratisierbaren mineralischem Werkstoff und einem Füllstoff oder Füllstoffgemisch und ist insbesondere geeignet, biegesteife, schwer- oder nicht entflammbare platten- oder schalenförmige Formkörper aus naturnahen Rohstoffen zu fertigen. Weiterhin können mittels des genannten Verfahrens derartige Formkörper mit guten mechanischen Eigenschaften aus Sekundärrohstoffen und Abprodukten der Industrie gefertigt werden.

Bereits seit langem ist bekannt, verschiedenste faserähnliche oder spanförmige Materialien, die aus Resten der landwirtschaftlichen oder forstwirtschaftlichen Produktion stammen, zu sogenannten Hartfaserplatten zu pressen. Dazu werden die Fasermaterialien mit Klebstoffen, zumeist Kunstharzen, gemischt und unter Druck und Hitze zu Platten gepresst, die als Bauplatten oder Konstruktionsteile im Bauwesen eingesetzt werden können. Es gibt auch Vorschläge, solche Platten unter Verwendung von Textilschnitzeln oder geheckselten Kunststoffabfällen herzustellen. Beispielsweise schlägt die DE 4327452 A1 eine Holzwoll-Leichtbauplatte vor, bei der die Holzwolle-Teilchen so mit einem Bindemitteln inkrustiert sind, dass die Hohlräume zwischen den Holzwolleteilchen mit einem Schaum des Bindemittels ausgefüllt werden.

Um den Anteil an synthetischen Stoffen in einer solchen Platte zu senken, schlägt die EP 0713508 B1 vor, einen Klebstoff zu verwenden, der aus einem wärmehärtbaren Harz auf Hülsenfruchtbasis und einem Cellulosemateriol besteht. Da alle diese Platten einen sehr hohen Celluloseanteil besitzen, sind deren Einsatzmöglichkeiten auf Grund der Brennbarkeit sehr eingeschränkt.

Eine Möglichkeit, die Brennbarkeit von Platten, die unter Verwendung von Fasern pflanzlichen Ursprungs hergestellt werden, zu verringern, ist, mineralische Bindemittel wie Gips, Zement, Anhydrit und ähnliches einzusetzen. Durch diese Kombination wird die hohe Bruchempfindlichkeit, die aus den mineralischen Bindemitteln resultiert, herabgesetzt, da die Faserstoffe quasi als Armierung wirken. Gleichzeitig verbessern die Naturfasern auf Grund der eingeschlossenen Luft die Wärmedämmung einer solchen Platte.

Ein Beispiel für derartige Platten ist in der EP 059 095 B1 zu finden.

Ein darin beschriebenes Verfahren zur Herstellung von Gipsfaserplatten beinhaltet folgende Schritte:
- In einem ersten Mischungsschritt Mischung aus einer vorher bestimmten Fasermenge, einem Löschmittel zu Verhinderung der Haftung der Fasern aneinander, Wasser und Gips zur Herstellung einer Mischung aus durchfeuchteten, losen Fasern
- im endgültigen Mischungsschritt Mischung der durchfeuchteten Fasern mit einer vorher bestimmten Menge von trockenem, kalzinierten Gips
- Zugabe eines Beschleunigungsadditivs zu einer der Komponenten der Mischung aus Fasern, Löschmittel, Wasser und Gips, um das Abbinden der Mischung aus Fasern, Löschmittel, Wasser und Gips zu beschleunigen
- streuen der Mischung in Mattenform, die eine im Wesentlichen gleichförmige Konsistenz hat
- Pressen der Matte zu einer Platte, bestehend aus gebundenen Fasern und Gips
- und Trocknen der Platte zum Endprodukt.

Die in der DE 19817519 A1 beschriebene Erfindung betrifft ein Verfahren zur Herstellung von Bauteilen, insbesondere von Bauplatten sowie von Gemischen, wobei neben Reststoffen aus fossilbetriebenen Kraftwerken auch organische Fasern zum Einsatz kommen. Der Erfindung liegt die Aufgabe zugrunde, leichte und stabile Bauteile und/oder Gemische herzustellen, die vielseitig für den Innen- und Außenausbau verwendbar sind und hauptsächlich aus Reststoffen und Naturmaterialien bestehen. Dies wird dadurch erreicht, dass erfindungsgemäß als Bindemittel gemäß 19719684.5 ein an sich bekanntes thermisch behandeltes Gemisch aus Verbrennungsrückständen, wasserhaltigen Substanzen und CaO zum Einsatz kommt, wobei dieses (als Bewehrung) mit aus nachwachsenden Rohstoffen und/oder recycelten Textilien entstehenden organischen Fasern sowie einem natürlichen Füllstoff und Wasser vermischt, ggf. anschließend in Formen gepresst und zur Aushärtung gebracht wird.

Die in der DE 4222872 A1 beschriebene dreischichtige Baustoffplatte auf Gipsbasis, die als Wandplatte oder Deckenplatte einsetzbar ist, besteht aus einer unteren Deckschicht, einer Mittelschicht und einer oberen Deckschicht, die mit besonderen Gipsbindemittel/Faser-Verhältnissen aufgebaut sind, die Mittelschicht faserreich. Die Baustoffplatte weist im Schnitt eine Verdichtungsstruktur auf, die der gleichzeitigen Verdichtung aller drei Schichten entspricht. Auch ein Verfahren zur Herstellung einer solchen Baustoffplatte wird angegeben.

In der DE 4204840 A1 wird ein Verfahren zum Herstellen von Gips-Faser-Bauteilen, insbesondere Bauplatten, vorgeschlagen, welches ermöglicht, Bauteile mit besonders hoher Festigkeit zu produzieren. Dazu werden trockene Fasern mit Kalziumoxyd vermischt und anschließend befeuchtet. Danach wird dieser Mischung Gips und gegebenenfalls Wasser zugegeben und das Gemenge wird dann in die gewünschte Form gebracht.

Auch das in der DE 4135144 A1 beschriebene Verfahren dient zur Herstellung eines faserverstärkten gehärteten Schlacke/Gips/Zement-Leichtprodukts, das als Material für Außen- und Innenwände von Baumaterialien verwendbar ist und das eine gute Feuer- und

Wasserbeständigkeit und eine gute Dauerhaftigkeit hat. Das Verfahren umfasst die Zugabe von 5 bis 140 Gewichtsteilen von Aggregaten mit einer maximalen Größe von nicht größer als 2000 µm zu 100 Gewichtsteilen eines Gemisches, das 100 Gewichtsteile Portlandzement, 20 bis 350 Gewichtsteile Schlackenfeinpulver, 0 bis 20 Gewichtsteile Kalk und 20 bis 100 Gewichtsteile Calciumaluminat und Gipsfeinpulver insgesamt enthält, vorausgesetzt, dass ein Gewichtsverhältnis von Gipsfeinpulver und Calciumaluminat im Bereich von 0,5 bis 2,0 : 1 vorliegt, weiterhin Zugabe von 0,01 bis 1,5 Gewichtsteilen eines Abbinderegulators zu dem Gemisch, Mischwasser, Schäume bzw. Schaumstoff und Verstärkungsfasern zu dem Gemisch, um einen Brei zu erhalten, Formen des Breis, Entfernen des entstandenen geformten Produkts und Härten des entfernten Produkts mit Dampf. Bei dem Verfahren gemäß der Erfindung erstarrt und erhärtet der Brei innerhalb kurzer Zeit und erlaubt, dass das gehärtete Produkt sofort aus einer Form entfernt werden kann. Ein gehärtetes Leichtbauprodukt kann innerhalb kurzer Zeit durch gewöhnliches Dampfhärten erhalten werden, und es besteht ein hoher Grad an Freizügigkeit im Hinblick auf Dicke und Form unter Schaffung von Außen- und Innenwandmaterialien.

Auf die Verwendung von Textilabfällen als Zuschlagstoff zu einem Bindemittel für die Herstellung von Bauelementen ist die in der DE 4108581 A1 beschriebene Erfindung gerichtet. Darin wird vorgeschlagen, zur Entlastung der Deponien für zerkleinerte Textilabfälle über die Nutzung als Zuschlagstoff zu mineralischen und organischen Bindemitteln hinaus neue Verwendungsmöglichkeiten zu erschließen, indem textiles Abfallmaterial als Zuschlagstoff zum Bindemittel Lehm für die Herstellung von Lehmbauelementen in Form von Streifen oder Bändern mit einer Länge von 60 bis 100 Millimetern und einer Breite von 10 bis 20 Millimetern verwendet wird. Die Textilabfälle werden zur Ausbildung eines Stützgerüstes gerichtet in die lehmige Masse eingebracht. Damit umfasst die Nutzung von textilem Abfallmaterial mit definierter Materialform und vorgegebenen Abmessungen als Zuschlagstoff zu Bindemitteln auch das Gebiet der bindigen Erdstoffe.

In den zuvor beschriebenen Platten sind die Fasern lediglich in das mineralische Bindemittel eingelagert. Die Bindung zwischen dem Fasermaterial und dem mineralischen Bindemittel beruht nur auf den Unregelmäßigkeiten der Oberfläche der Faserstoffe und daraus resultierenden formschlüssigen Verbindungen. Dadurch kann nur ein Teil der Zugfestigkeit der Faserstoffe zur Verbesserung der Festigkeit der Platten ausgenutzt werden.

Dieser Mangel kann auch durch das Verfahren zur Herstellung von verstärkten Gipsplatten, das in der DE 3626048 A1 vorgestellt wird, nicht beseitigt werden. In dieser Schrift wird vorgeschlagenen, mit Bewehrungsstoffen, bevorzugt mit Cellulose-Teilchen, verstärkten Gipsplatten durch Vermischen von zur Rehydratation befähigten Gipsbindemitteln, Wasser sowie gegebenenfalls Bewehrungsstoffen und anschließendes Verpressen der erhaltenen Mischung, Platten herzustellen, die dadurch, dass man Polyisocyanate der Mischung zur Herstellung der Gipsplatten zusetzt und/oder auf die Oberfläche von gefertigten Gipsplatten aufbringt, weniger feuchtigkeitsempfindlich sein sollen.

Die Sprödigkeit des mineralischen Bindemittels bestimmt die Bruchfestigkeit des Erzeugnisses, und die Schlagzähigkeit von Faserplatten kann nicht erreicht werden.

Aufgabe der Erfindung ist es somit, ein Verfahren zur Herstellung eines Formkörpers aus einem hydratisierbaren mineralischen Werkstoff und einem Füllstoff vorzuschlagen, der die Vorzüge faserstoffverstärkter Platten aus mineralischen Werkstoffen bezüglich der Brandfestigkeit und

Steifigkeiten mit der Schlagzähigkeit von Hartfaserplatten verbindet. Diese Aufgabe wird mit dem im Hauptanspruch beschriebenen Verfahren gelöst.

Erfindungsgemäß wird ein Formkörper aus einem hydratisierbaren mineralischen Werkstoff und einem Füllstoff oder Füllstoffgemisch hergestellt, indem die hydratisierbaren mineralischen Werkstoffe in einem ersten Schritt mit dem Füllstoff oder Füllstoffgemisch vermengt werden. In einem zweiten Schritt wird ein nicht in Wasser löslicher Klebstoff hinzugemischt. Ein derartiger Klebstoff ist nach der Definition des Lexikons ABC Chemie- Brockhausverlag Leipzig 1964, S. 678 wie folgt definiert. "Klebstoff, "ist ein" nichtmetallischer Werkstoff zum Verbinden gleich- oder verschiedenartiger Stoffe miteinander ohne Veränderung ihres Gefüges. Die Klebfestigkeit beruht auf der Haftung (Adhäsion) der Moleküle des Klebstoffgrundstoffs auf der Oberfläche des zu verklebenden Werkstoffs und der ausreichenden mechanischen Festigkeit (Kohäsion) den Klebstoffs. Die Klebstoffe bestehen aus Grundstoffen (meist natürliche oder synthetische organische Polymere) mit Zusatz von Lösungsmitteln, Weichmachern, Füllstoffen, Streckmitteln, Härtern oder anderen, die Klebeigenschaften oder das Abbinden beeinflussenden Stoffen. " Für das erfindungsgemäße Verfahren können von den dort zitierten Grundstoffen insbesondere Naturkautschuk und synthetische Kautschuktypen (Polychlorbutadien), thermoplastische Hochpolymere (Cellulosenitrat, Polyvinylacetat, Polyacryl- und Polymethacrylsäureester, Vinylchlorid-Mischpolymere und nachchloriertes Polyvinylchlorid, Polyvinylether und -azetate), synthetische, meist härtbare Harze (Phenol- und Carbamid-Formaldehydharze, Epoxydharze, ungesättigte Polyesterharze, Polyurethane, Polysulfide, Silikone), Naturharze (Kolophonium, Schellack, Kopale) sowie Wachse und bituminöse Massen Verwendung finden. Nach dem Einmischen des Klebstoffes wird die Masse in die gewünschte Form, in der Regel eine Plattenform, gebracht. Im nächsten Schritt wird die Verfestigung des Klebstoffes ausgelöst, indem das Lösungsmittel des Bindemittels verdampft oder das Bindemittel durch kurzzeitige Erwärmung an- oder aufgeschmolzen wird. Dadurch werden die Stoffe des Materials an ihren Berührungspunkten miteinander verklebt. Der so vorverfestigten Masse wird nach der Verfestigung des Klebstoffes im vorgeformten Körper so viel Wasser zugeführt, dass der mineralische Werkstoff vollständig abbinden kann. Durch die Wasserzugabe hydratisiert das mineralische Bindemittel und füllt die Zwischenräume des aus dem Füllmaterial gebildeten Gitterwerkes mit einem Netzwerk aus verbunden Kristallen aus. Da die sich bildenden Kristalle ein größeres Volumen einnehmen als die ursprüngliche Substanz, werden die Zwischenräume des aus dem Füllmaterial gebildeten Gitterwerkes ausgepresst. In dem aus den verklebten Fasern des Füllmaterials gebildeten Gitternetzwerk wird somit eine Vorspannung erzeugt, die, wie leicht einzusehen, die Festigkeit des Gesamtgebildes erhöht.

Zur Erzeugung des erfindungsgemäß gewünschten Gitternetzwerkes können als Füllstoffe sowohl faserige oder spanförmige Partikel aus pflanzlichem Material wie Sägespäne oder Holzwolle, Schäben aus der Hanf- oder Flachsverarbeitung, als auch Fasern tierischen Ursprungs wie Tierhaare, Borsten, sowie synthetischen Fasern, insbesondere Mikrofasern oder letztlich auch Mineralfasern eingesetzt werden. Natürlich können zur "Konstruktion" besonderer Eigenschaften auch Gemische von zwei oder mehreren der vorgenannten Substanzen eingesetzt werden.

Als Klebstoffe können je nach der Stärke der Formkörper und den zu verbindenden Füllstofffasern auch gelöste oder schmelzbare natürliche oder synthetischen Harze sowie anorganische Klebstoffe mit geringem oder ohne Wasseraufnahmevermögen verwendet werden.

Je nach Art des Klebstoffes kann dessen Verfestigung durch Erwärmen ausgelöst werden, indem ein vorhandenes Lösungsmittel abgedampft und/oder der Klebstoff kurzzeitig aufgeschmolzen wird.

Vorteilhaft wird man die Verfestigung des Klebstoffes mit der Ausformung des Formkörpers kombinieren.

Wenn die Formung unter Einwirkung eines Pressdrucks erfolgt, entsteht bereits mit der Rückverformung der Faserpartikel eine gewisse Spannung im Füllstoffnetzwerk.

Für das Verfahren sind hydratisierbare mineralische Werkstoffe in Form von aufbereiteten natürlichen Rohstoffen wie Gips, Anhydrit oder Kalk oder industriell erzeugten Baustoffen wie Zement oder reaktiver Flugasche oder Gemischen aus zwei oder mehreren der vorgenannten Materialien geeignet.

Natürlich wird der Rahmen der Erfindung nicht überschritten, wenn bei der Mischung des hydratisierbaren mineralischen Werkstoffes, der Füllstoffe und des Klebstoffes weitere qualitätsbestimmende Substanzen wie Farbstoffe, Inhibitoren, Reaktionsvermittler oder Metallstäube beigemischt werden.

Da erst nach der Verfestigung des wasserunlöslichen Klebstoffes das zum Hydratisieren benötigte Wasser zugeführt wird, ist vorteilhaft, wenn die durch Mischung entstandene Masse zu plattenförmigen Körpern oder schalenförmigen Formkörpern gepresst wird, da andernfalls das Eindringen des Wassers einen zu hohen Zeitaufwand erfordert.

Zur Erzielung spezieller mechanischer Eigenschaften kann es von Vorteil sein, wenn mehrere Lagen der vorgenannten Mischung mit unterschiedlichen Mischungsverhältnissen oder Materialzusammensetzungen zu einem Schichtkörper gepresst werden. Um bestimmte optische oder mechanische Eigenschaften zu erzielen, wird erfindungsgemäß vorgeschlagen, dass die entstandenen Form- oder Schichtkörper einer Oberflächenbehandlung durch Schleifen, Lackieren oder Aufkaschieren folienähnlicher Schichten endbehandelt werden.

Um die Klebstoffbrücken zwischen den Partikeln des Füllstoffes stabiler ausführen zu können, schlägt die Erfindung letztlich vor, die Partikel des Füllstoffes mit einem gelösten oder geschmolzenen Klebstoff zu beschichten, bevor sie dem Gemisch beigegeben werden.

Die Erfindung soll im Folgenden anhand zweier Ausführungsbeispiele erläutert werden.

### Ausführungsbeispiel 1

Eine Platte zur Verwendung im ökologischen Wohnungsbau wird wie folgt hergestellt. Eine Faserstoffmischung aus Hanfschäben und den Abfällen der Flachsspinnerei wird in einem ersten Arbeitsgang mit einer 10%igen alkoholischen Kolophonium-Lösung besprüht. Anschließend wird die 4-fache Menge an aus natürlichem Anhydrit gewonnenem Gips untergemischt. Diese Mischung wird zu einer gleichmäßige Schicht ausgebreitet und unter Hitzeeinwirkung zu einer Platte verpresst. Mit Hilfe einer Sprüheinrichtung wird die so vorbehandelte Platte durchfeuchtet. Nach dem Abbinden des Gipses und der Verdunstung der Restfeuchtigkeit kann die Platte als Wand- oder Deckenverkleidung eingesetzt werden.

### Ausführungsbeispiel 2

Eine Außenwandplatte für industrielle Gebäude wird wie folgt hergestellt. Eine Mischung aus Mineralfasern und Sägespänen wird mit in Aceton gelöstem Polystyrol angefeuchtet. Diese Mischung wird mit einem Gemisch aus Zement und Sand zu gleichen Gewichtsteilen gemischt. Nach dem Ausbringen zu einer gleichmäßigen Schicht wird diese durch mehrere heiße Walzen geführt und damit unter Wärmeeinwirkung verdichtet. Der entstandene Strang wird durch einen Wasserschwall geführt und zu Platten zerschnitten.

## Patentansprüche

1. Verfahren zur Herstellung eines Formkörpers aus einem hydratisierbaren mineralischen Werkstoff oder Werkstoffgemisch und einem Füllstoff oder Füllstoffgemisch, **dadurch gekennzeichnet, dass** der hydratisierbare mineralische Werkstoff oder das Werkstoffgemisch in einem ersten Schritt mit dem Füllstoff oder Füllstoffgemisch vermengt wird, dass in einem zweiten Schritt ein nicht in Wasser löslicher Klebstoff hinzugemischt wird, dass darauffolgend die Masse in die gewünschte Form gebracht wird und dass in einem weiteren Schritt die Verfestigung des Klebstoffs ausgelöst wird, sowie dass nach der Verfestigung des Klebstoffs dem vorgeformten Körper soviel Wasser zugeführt wird, dass der mineralische Werkstoff abbinden kann und dass gegebenenfalls eine vorhandene Restfeuchte durch einen Trocknungsprozess beseitigt wird.

2. Verfahren nach Anspruch 1, **dadurch gekennzeichnet, dass** als Füllstoff faserige oder spanförmige Körper aus pflanzlichen, tierischen, synthetischen, mineralischen, organischen oder anorganischen Materialien oder Gemische aus den vorgenannten Stoffgruppen eingesetzt werden.

3. Verfahren nach Anspruch 1 oder 2, **dadurch gekennzeichnet, dass** als Klebstoff gelöste oder schmelzbare natürliche oder synthetische Harze oder Harzgemische sowie organische, anorganische, mineralische oder synthetische Klebstoffe, Klebstoffsysteme oder Gemische aus vorgenannten Stoffen verwendet werden.

4. Verfahren nach einem der voranstehenden Ansprüche, **dadurch gekennzeichnet, dass** die Verfestigung des Klebstoffs durch Erwärmen ausgelöst wird, indem das vorhandene Lösungsmittel abgedampft oder der Klebstoff kurzzeitig aufgeschmolzen wird.

5. Verfahren nach einem der voranstehenden Ansprüche, **dadurch gekennzeichnet, dass** die Verfestigung des Klebstoffs mit der Formung des Formkörpers kombiniert wird.

6. Verfahren nach einem der voranstehenden Ansprüche, **dadurch gekennzeichnet, dass** die Formung unter Einwirkung eines Pressdrucks und/oder einer Wärmeeinwirkung erfolgt.

7. Verfahren nach einem der voranstehenden Ansprüche, **dadurch gekennzeichnet, dass** als hydratisierbare mineralische Werkstoffe aufbereitete natürliche Rohstoffe wie Gips, Anhydrit oder Kalk oder industriell erzeugte Baustoffe wie Zement oder reaktive Flugasche oder synthetische mineralische Werkstoffe oder Gemische aus den vorgenannten Materialien eingesetzt werden.

8. Verfahren nach einem der voranstehenden Ansprüche, **dadurch gekennzeichnet, dass** bei der Mischung des hydratisierbaren mineralischen Werkstoffs, des Füllstoffs und des Klebstoffs weitere qualitätsbestimmende Substanzen wie Farbstoffe, Inhibitoren, Reaktionsvermittler, Steinmehl oder Metallstäube beigemischt werden.

9. Verfahren nach einem der voranstehenden Ansprüche, **dadurch gekennzeichnet, dass** die durch Mischung entstandene Masse zu plattenförmigen Körpern oder schalenförmigen Formkörpern oder Sonderformkörpern gepresst wird.

10. Verfahren nach einem der voranstehenden Ansprüche 1 bis 8, **dadurch gekennzeichnet, dass** mehrere Lagen der vorgenannten Mischung mit unterschiedlichen Mischungsverhältnissen oder Materialzusammensetzungen zu einem Schichtkörper gepresst werden.

11. Verfahren nach einem der voranstehenden Ansprüche 1 bis 10, **dadurch gekennzeichnet, dass** die entstandenen Form- oder Schichtkörper einer Oberflächenbehandlung wie Schleifen, Beschichten, Lackieren oder Aufkaschieren folienähnlicher Schichten unterzogen werden.

12. Verfahren nach einem der voranstehenden Ansprüche, **dadurch gekennzeichnet, dass** die Füllstoff-Körper mit einem der in Anspruch 3 genannten Klebstoffe oder mit einer mineralischen, anorganischen, organischen oder synthetischen Suspensionsschicht beschichtet werden, bevor sie dem Gemisch beigegeben werden.

## Claims

1. Method for making a molded piece of a hydratable mineral material or material mixture and a filler or filler mixture, **characterized in that** the hydratable mineral material or the material mixture in a first step is blended with the filler or filler mixture, that in a second step an adhesive that is not soluble in water is added to the mixture, that following this the mass is shaped as needed and that in another step the solidification of the adhesive is catalyzed, as well as that, after solidification of the adhesive water in an amount is added to the preformed piece that the mineral material can set and that residual moisture which may still be contained is eliminated by a drying process.

2. Method as claimed in claim 1, **characterized in that** fibrous or chip-shaped pieces of vegetable, animal, synthetic, mineral, organic or inorganic material or mixtures of the aforementioned groups of substances are used as filler.

3. Method as claimed in claim 1 or 2, **characterized in that** dissolved or fusible natural or synthetic resins or resin mixtures as well as organic, inorganic, mineral or synthetic mixtures of the aforementioned groups of substances are used as adhesive.

4. Method as claimed in any of the preceding claims, **characterized in that** the solidification of the adhesive is catalyzed by heating whereby the available solvent evaporates or the adhesive is fused briefly.

5. Method as claimed in any of the preceding claims, **characterized in that** the solidification of the adhesive is combined with the molding of the molded piece.

6. Method as claimed in any of the preceding claims, **characterized in that** the molding occurs under the action of a contact pressure and/or the action of heat.

7. Method as claimed in any of the preceding claims **characterized in that** treated natural materials such as gypsum, anhydrite or lime or industrially produced building materials such as cement or reactive fly ash or synthetic mineral materials or mixtures of the aforementioned materials are used as hydratable mineral materials.

8. Method as claimed in any of the preceding claims, **characterized in that** during the mixing of the hydratable mineral material, the filler and the adhesive, other quality-determining substances such as dyes, inhibitors, reaction agents, rock meal or metallic powders are added.

9. Method as claimed in any of the preceding claims, **characterized in that** the mass obtained by mixing is pressed into slab-shaped pieces or shell-shaped molded pieces or special molded pieces.

10. Method as claimed in any of the preceding claims 1 to 8, **characterized in that** several layers of the aforementioned mixture with different mixing ratios or material compositions are pressed to form a laminated piece.

11. Method as claimed in any of the preceding claims 1 to 10, **characterized in that** the molded or laminated pieces so obtained are subjected to surface treatment such as grinding, coating, varnishing or lining with film-like layers.

12. Method as claimed in any of the preceding claims, **characterized in that** the filler parts are coated with one of the adhesives mentioned in claim 3 or with a mineral, inorganic, organic or synthetic suspension coat before they are added to the mixture.

## Revendications

1. Procédé de fabrication d'un corps de moule en matière minérale hydratable ou en mélange de matières, et en matière de remplissage ou mélange de matières de remplissage, **caractérisé par le fait que** la matière minérale hydratable ou le mélange de matières doit être mélangé dans une première étape avec la matière de remplissage ou le mélange de matières de remplissage, que dans une deuxième étape, une colle insoluble dans l'eau doit être ajoutée, qu'ensuite le mélange est mis dans la forme souhaitée, et que dans une autre étape, la solidification de la colle est déclenchée, et qu'après la solidification de la colle, l'eau nécessaire est ajoutée au corps préformé, pour que la matière minérale puisse prendre, et qu'une humidité restante éventuellement présente soit supprimée par un processus de séchage.

2. Procédé selon la revendication 1, **caractérisé par le fait que** comme matière de remplissage, on utilise des corps fibreux ou en copeaux agglomérés de matières ou mélanges végétaux, animaux, synthétiques, minéraux, organiques ou inorganiques des groupes de matières précités.

3. Procédé selon la revendication 1 ou 2, **caractérisé par le fait que** comme colle, on utilise des résines ou mélanges de résines naturelles ou synthétiques dissous ou fusibles, ainsi que des colles, des systèmes de colle ou des mélanges organiques, inorganiques ou synthétiques des matières précitées.

4. Procédé selon l'une des revendications précédentes, **caractérisé par le fait que** la solidification de la colle est déclenchée par échauffement, en faisant évaporer le solvant présent ou en faisant fondre brièvement la colle.

5. Procédé selon l'une des revendications précédentes, **caractérisé par le fait que** la solidification de la colle est combinée avec le moulage du corps de moule.

6. Procédé selon l'une des revendications précédentes, **caractérisé par le fait que** le moulage est effectué par l'effet d'une pression de compression et/ou par une action de la chaleur.

7. Procédé selon l'une des revendications précédentes, **caractérisé par le fait que** comme matières minérales, hydratables, on utilise des matières premières naturelles, traitées telles que du plâtre, de l'anhydrite ou de la chaux ou des matériaux industriels, tels que du ciment ou des centres volantes réactives ou des matières ou mélanges synthétiques minéraux des matériaux précités.

8. Procédé selon l'une des revendications précédentes, **caractérisé par le fait que** lors du mélange de la matière minérale, hydratable, de la matière de remplissage et de la colle, on ajoute d'autres substances déterminantes pour la qualité, telles que des colorants, des inhibiteurs, des médiateurs de réaction, de la farine calcaire ou des poussières métalliques.

9. Procédé selon l'une des revendications précédentes, **caractérisé par le fait que** la matière obtenue par le mélange est pressée en forme de plaques ou de corps de moule en forme de coquilles ou de corps de moule spéciaux.

10. Procédé selon l'une des revendications précédentes 1 à 8, **caractérisé par le fait que** plusieurs couches du mélange précité sont pressées avec différents rapports de mélange ou compositions de matériaux, sous forme de stratifié.

11. Procédé selon l'une des revendications précédentes 1 à 10, **caractérisé par le fait que** le corps de moule ou le stratifié obtenu est soumis à un traitement de surface tel que ponçage, revêtement, peinture ou doublage avec des feuilles.

12. Procédé selon l'une des revendications précédentes, **caractérisé par le fait que** les corps de la matière de remplissage sont revêtus de l'une des colles mentionnées dans la revendication 3 ou d'une couche de suspension minérale, inorganique, organique ou synthétique, avant d'être ajoutés au mélange.
